# FASCICULE DE BREVET EUROPEEN

(11) **EP 2 980 147 B1**
(45) Date de publication et mention de la délivrance du brevet: **16.08.2017**
(21) Numéro de dépôt: 15177761.2
(22) Date de dépôt: 21.07.2015
(51) Int. Cl.: C08K 5/00, C08K 5/01, C08K 5/11, C08L 11/00

(54) **FORMULATION POUR LAME DE BALAI D'ESSUIE-GLACE**
ZUSAMMENSETZUNG FÜR SCHEIBENWISCHERBLATT
COMPOSITION FOR A WINDSCREEN WIPER BLADE

(30) Priorité: 28.07.2014 FR 1457281
(43) Date de publication de la demande: 03.02.2016
(73) Titulaire: Valeo Systèmes d'Essuyage, 78322 Le Mesnil Saint Denis (FR)
(72) Inventeur: ASSUID, Patrick, 63960 VEYRE MONTON (FR)
(74) Mandataire: Callu Danseux, Violaine

(56) Documents cités:
- EP-A1- 2 684 913
- FR-A5- 2 084 541

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et ils comportent des balais allongés, porteurs eux-mêmes de lames d'essuyage réalisées en une matière élastique. Ces lames d'essuyage ont généralement une forme triangulaire s'amincissant vers le bas dont le sommet inférieur se déplace sur le pare-brise et dont le côté supérieur est rattaché par une bande élastique mince au corps du balai. Cette bande mince permet, en se déformant, à la lame d'essuyage de s'incliner vers le pare-brise, dans un sens puis dans l'autre, lors des mouvements de va-et-vient du balai.

Ces lames frottent contre le pare-brise et évacuent l'eau en l'amenant en dehors du champ de vision du conducteur. L'usure créée par ce va-et-vient réduit la longévité de ces lames et le frottement de la lame d'essuyage contre le pare-brise, en particulier lorsque celui-ci est peu humide, peut générer des nuisances sonores. Il importe donc de trouver une formulation adéquate pour le matériau élastomère qui compose ces lames afin, d'une part, d'augmenter cette durée de vie autant que faire se peut et, d'autre part, d'éviter les nuisances sonores.

Les lames d'essuyage sont généralement réalisées en un matériau élastomère qui est issu de la gamme des caoutchoucs et qui a été vulcanisé. Un type de caoutchouc parfois employé pour des balais d'essuie-glaces est du caoutchouc chloroprène, habituellement dénommé caoutchouc CR, et plus connu sous sa dénomination commerciale néoprène. Le matériau élastomère est préparé, avant sa vulcanisation, sous forme d'un mélange de caoutchouc CR et de divers ingrédients qui modifient les propriétés mécaniques qu'il aura après la vulcanisation. On trouve notamment de l'oxyde de zinc ZnO qui est l'agent vulcanisateur pour ce type de caoutchouc et un accélérateur de vulcanisation pour accélérer ce processus. Divers additifs sont également incorporés, comme du noir de carbone pour augmenter sa résistance à l'abrasion, des agents plastifiants et/ou des corps gras pour le rendre plus malléable pendant sa fabrication et de meilleure tenue aux basses températures, des antioxydants ou encore des produits pour ajuster l'acidité ou pour masquer certaines odeurs. Les corps gras, appelés également charges lubrifiantes, introduits dans la formulation sont en particulier utilisés pour diminuer le coefficient de friction de la lame sur le pare-brise.

La réalisation d'une lame, à partir du mélange effectué, est obtenue par une mise en forme, soit par compression dans un moule, soit par extrusion à travers une filière, avant que la vulcanisation ne débute.

Le bruit généré par le frottement des balais sur le pare-brise, qui est d'occurrence souvent aléatoire et qui apparaît généralement dans une gamme de fréquence de 600 à 1000Hz, doit être maîtrisé. Pour cela il est connu d'ajouter divers produits plastifiants, comme par exemple des huiles issues de la chimie du pétrole. Leur fonction est d'améliorer l'amortissement des vibrations à haute fréquence du balai d'essuie-glace, en limitant la caractéristique élastique de ce matériau et en accroissant corrélativement sa composante visqueuse.

La quantification de cette caractéristique d'amortissement s'effectue sur un analyseur mécanique dynamique de viscoélasticité (ou DMA selon l'acronyme anglais de Digital Mechanical Analyser) qui mesure l'angle de déphasage δ existant entre une contrainte appliquée au matériau viscoélastique en vibrations forcées, sous la forme d'une oscillation sinusoïdale, et la déformation sinusoïdale de même fréquence qui en résulte. La grandeur représentative de la viscoélasticité de l'élastomère est exprimée sous la forme de la tangente de cet angle δ. Plus cet angle est élevé, meilleur est le niveau d'amortissement et donc moindre est le risque de bruits transitoires.

Cette qualification s'effectue à des fréquences moins élevées (quelques hertz ou dizaines d'hertz) que les fréquences que l'on cherche à contrôler, de façon que les effets des oscillations de la contrainte appliquée soient observables. Il est alors connu de retrouver l'impact de ces sollicitations aux hautes fréquences à l'aide d'une relation entre les fréquence et température auxquels est soumis l'élastomère au cours de l'essai et les fréquence et température en utilisation. Ainsi une expérimentation effectuée à -20°C sous 1 HZ donne les mêmes résultats que si l'expérimentation était effectuée à température ambiante et à une fréquence de 600 HZ.

Du point de vue des caoutchoucs envisagés, le caoutchouc chloroprène CR, qui est parfois employé pour la réalisation d'une lame d'essuyage, présente déjà un bon niveau d'amortissement, par comparaison avec les autres caoutchoucs envisageables (comme le caoutchouc naturel NR ou des élastomères spéciaux de type EPDM, ou éthylène-propylène-diène monomère).

Il est néanmoins souhaitable d'améliorer cette caractéristique d'amortissement en choisissant de façon appropriée des plastifiants à incorporer dans le mélange avant sa vulcanisation. La mobilité moléculaire des produits ajoutés a en effet un impact direct sur la tangente δ de l'élastomère.

A cet effet, l'invention a pour objet une formulation pour la réalisation d'une lame d'essuyage pour balai d'essuie-glace de véhicule, ladite formulation comprenant un matériau élastomère à base de caoutchouc chloroprène dans lequel sont incorporés des additifs plastifiants, caractérisée en ce que lesdits additifs plastifiants comprennent une association d'au moins un premier additif dont le point d'écoulement est inférieur à -50°C et au moins un second additif dont le point d'écoulement est supérieur à -50°C.

Par « formulation », on entend une composition chimique.

Par « réalisation », on entend la fabrication de la lame d'essuyage.

Ce double ajout permet d'améliorer l'amortissement viscoélastique de l'élastomère sans dégrader son élasticité à basse température.

De façon préférentielle le point d'écoulement dudit premier additif est supérieur ou égal à - 60°C.

Dans un mode particulier de réalisation ledit premier additif comprend un ester, et plus préférentiellement un di-ester carboxylique en C18-C30, par exemple du sebaçate octylique.

De façon préférentielle le point d'écoulement dudit second additif est inférieur ou égal à - 30°C.

De façon plus préférentielle le point d'écoulement dudit second additif.est compris entre - 46°C et -30°C, de préférence compris entre -40 et - 30 et plus préférentiellement sensiblement égal à -30°C.

Dans un mode particulier de réalisation ledit second additif est un plastifiant pétrolier naphtalique ou un tri-ester carboxylique en C18-C30.

Avantageusement la quantité du premier additif est comprise entre 3 et 5 pcc (parties pour cent parties de caoutchouc, en masse), et plus avantageusement elle est de 4 pcc.

Préférentiellement le ratio de masse entre le premier et second additif est compris entre 2 et 3, et plus préférentiellement est sensiblement égal à 2,5.

L'invention porte également sur une lame d'essuyage pour balai d'essuie-glace de véhicule réalisée à partir d'une formulation telle que décrite ci-dessus, et sur un balai d'essuie-glace de véhicule comportant une telle lame d'essuyage.

Elle porte enfin sur un procédé de fabrication d'une lame d'essuyage pour balai d'essuie-glace de véhicule par vulcanisation d'une formulation telle que décrite ci-dessus.

Selon un mode de réalisation de l'invention, le procédé ci-dessus comprend une étape de moulage de la lame d'essuyage.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif.

Pour augmenter la valeur de la tangente δ du mélange la demanderesse propose d'ajouter un plastifiant à haut point d'écoulement, qui soit de l'ordre de -50 à -30°C, et en tout état de cause supérieur à -50°C. Le point d'écoulement d'un matériau viscoélastique correspond à la température à partir de laquelle il commence à quitter la phase solide et à s'écouler. Le plastifiant ajouté peut être un produit tel que ceux connus sous la dénomination commerciale Nyflex 230P ou TOTM, dont les points d'écoulement sont respectivement de -30°C et -46°C, ou plus généralem ent un produit du type plastifiant pétrolier naphtalique ou bien un tri-ester carboxylique dans la gamme des C18 à C30. L'ajout de ce plastifiant augmente la tangente δ à -20°C et par conséquent l'amortissement viscoélastique de l'élastomère dans la gamme de fréquence des 600 à 1000 Hz.

En revanche cette adjonction présente l'inconvénient de dégrader les propriétés de résistance au froid du caoutchouc. La demanderesse propose en conséquence d'adjoindre au mélange élastomère un deuxième plastifiant à bas point d'écoulement. Ce second plastifiant est du type ester et permet, du fait de sa haute mobilité moléculaire, d'améliorer l'élasticité à basse température du matériau. Le point d'écoulement préconisé par l'invention est fixé comme étant inférieur à -50°C. A titre d'exemple il est possible de choisir un ester du type sebaçate octylique (ou DOS) dont le point d'écoulement est de - 55°C, ou plus généralement un di-ester carboxylique dans la gamme C18 à C30.

Les taux préconisés pour les deux plastifiants sont de 4phr (pour "parts per hundred rubber" ou parties pour 100 parties de caoutchouc en masse, ou encore pcc selon la dénomination équivalente française) pour le plastifiant à bas point d'écoulement et de 10 pcc pour le plastifiant à haut point d'écoulement. Des essais ont montré que l'ajout d'un plastifiant à haut point d'écoulement à la concentration de 10 pcc, associé à une réduction à 4 pcc de celui à bas point d'écoulement, procure une amélioration de la tangente δ à - 20°C de 0,2 ou même 0,3 points, pour les deux produits mentionnés ci-dessus, par rapport à une formulation qui ne comporterait que le seul plastifiant à bas point d'écoulement. On constate par ailleurs que le gain le plus important (0,3 contre 0,2 points) est apporté par le plastifiant qui a le point d'écoulement le plus haut (-30°C contre -46°C, en l'occurrence, dans les deux formulations expérimentées).

La valeur de tangente δ obtenue à -20°C avec ces additifs atteint ainsi des valeurs, respectivement, de 0,7 et 0,8 (contre respectivement 0,4 et 0,6 sans additif à haut point d'écoulement) lors d'une expérimentation en vibrations forcées de 30 microns d'amplitude sous une fréquence de 1 Hz. Ces valeurs garantissent une absence de bruit parasite pour une lame d'essuyage en utilisation sur un pare-brise.

## Revendications

1. Formulation pour la réalisation d'une lame d'essuyage pour balai d'essuie-glace de véhicule, ladite formulation comprenant un matériau élastomère à base de caoutchouc chloroprène dans lequel sont incorporés des additifs plastifiants,
**caractérisée en ce que** lesdits additifs plastifiants comprennent une association d'au moins un premier additif dont le point d'écoulement est inférieur à -50°C et au moins un second additif dont le point d'écoulement est supérieur à -50°C.

2. Formulation selon la revendication 1, dans laquelle le point d'écoulement dudit premier additif est supérieur ou égal à -60°C.

3. Formulation selon la revendication 2, dans laquelle ledit premier additif comprend un ester, et plus préférentiellement un di-ester carboxylique en C18-C30, par exemple du sebaçate octylique.

4. Formulation selon l'une des revendications 1 à 3, dans laquelle le point d'écoulement dudit second additif est inférieur ou égal à -30°C.

5. Formulation selon l'une des revendications 1 à 4, dans laquelle le point d'écoulement dudit second additif est compris entre -46°C et -30°C, de préférence compris entre -40 et -30 et plus préférentiellement sensiblement égal à -30°C.

6. Formulation selon la revendication 5, dans laquelle ledit second additif est un plastifiant pétrolier naphtalique ou un tri-ester carboxylique en C18-C30.

7. Formulation selon l'une des revendications 1 à 6, dans laquelle la quantité du premier additif est comprise entre 3 et 5 pcc (parties pour cent parties de caoutchouc, en masse).

8. Formulation selon la revendication 7, dans laquelle ladite quantité est de 4 pcc (parties pour cent parties de caoutchouc, en masse).

9. Formulation pour la réalisation d'une lame d'essuyage selon l'une des revendications 1 à 8, dans laquelle le ratio de masse entre le premier et second additif est compris entre 2 et 3.

10. Formulation selon la revendication 9, dans laquelle le ratio est sensiblement égal à 2,5.

11. Lame d'essuyage pour balai d'essuie-glace de véhicule réalisée à partir d'une formulation selon l'une des revendications 1 à 10.

12. Balai d'essuie-glace de véhicule comportant une lame d'essuyage selon la revendication précédente.

13. Procédé de fabrication d'une lame d'essuyage pour balai d'essuie-glace de véhicule par vulcanisation d'une formulation selon l'une des revendications 1 à 10.

14. Procédé selon la revendication 13, comprenant une étape de moulage de la lame d'essuyage.

## Patentansprüche

1. Formulierung zur Herstellung eines Wischerblatts für Fahrzeugscheibenwischer, wobei die Formulierung ein Elastomermaterial auf Basis von Chloroprenkautschuk umfasst, in das weichmachende Zusatzstoffe integriert sind,
**dadurch gekennzeichnet, dass** die weichmachenden Zusatzstoffe eine Kombination aus mindestens einem ersten Zusatzstoff, dessen Pourpoint kleiner -50 °C ist und mindestens einen zweiten Zusatzstoff, dessen Pourpoint größer -50 °C ist, umfassen.

2. Formulierung nach Anspruch 1, wobei der Pourpoint des ersten Zusatzstoffs größer oder gleich -60 °C ist.

3. Formulierung nach Anspruch 2, wobei der erste Zusatzstoff einen Ester und stärker bevorzugt einen C18-C30-Carbonsäurediester, zum Beispiel Octylsebacat, umfasst.

4. Formulierung nach einem der Ansprüche 1 bis 3, wobei der Pourpoint des zweiten Zusatzstoffs kleiner oder gleich -30 °C ist.

5. Formulierung nach einem der Ansprüche 1 bis 4, wobei der Pourpoint des zweiten Zusatzstoffs im Bereich zwischen -46 °C und -30 °C, bevorzugt im Bereich zwischen -40 und -30 liegt und besonders bevorzugt im Wesentlichen gleich -30 °C ist.

6. Formulierung nach Anspruch 5, wobei der zweite Zusatzstoff ein Weichmacher aus naphtalischem Mineralöl oder ein C18-C30-Carbonsäuretriester ist.

7. Formulierung nach einem der Ansprüche 1 bis 6, wobei die Menge des ersten Zusatzstoffs im Bereich zwischen 3 und 5 pph (Masseteile auf hundert Masseteile Kautschuk) liegt.

8. Formulierung nach Anspruch 7, wobei die Menge bei 4 pph (Masseteile auf hundert Masseteile Kautschuk) liegt.

9. Formulierung zur Herstellung eines Wischerblatts nach einem der Ansprüche 1 bis 8, wobei das Masseverhältnis zwischen dem ersten und dem zweiten Zusatzstoff im Bereich zwischen 2 und 3 liegt.

10. Formulierung nach Anspruch 9, wobei das Verhältnis im Wesentlichen gleich 2,5 ist.

11. Wischerblatt für Fahrzeugscheibenwischer, hergestellt aus einer Formulierung nach einem der Ansprüche 1 bis 10.

12. Fahrzeugscheibenwischer, umfassend ein Wischerblatt nach dem vorhergehenden Anspruch.

13. Verfahren zum Herstellen eines Wischerblatts für Fahrzeugscheibenwischer durch Vulkanisieren einer Formulierung nach einem der Ansprüche 1 bis 10.

14. Verfahren nach Anspruch 13, umfassend einen Schritt des Formens des Wischerblatts.

## Claims

1. Formulation for the preparation of a wiping blade element for a vehicle windscreen wiper blade, the said formulation comprising an elastomer material based on chloroprene rubber in which plasticizing additives are incorporated,
**characterized in that** the said plasticizing additives comprise a combination of at least a first additive, the pour point of which is less than -50°C, and at least a second additive, the pour point of which is greater than -50°C.

2. Formulation according to Claim 1, in which the pour point of the said first additive is greater than or equal to -60°C.

3. Formulation according to Claim 2, in which the said first additive comprises an ester and more preferably a C₁₈-C₃₀ dicarboxylic ester, for example octyl sebacate.

4. Formulation according to one of Claims 1 to 3, in which the pour point of the said second additive is less than or equal to -30°C.

5. Formulation according to one of Claims 1 to 4, in which the pour point of the said second additive is between -46°C and -30°C, pr eferably between -40°C and -30°C and more preferably substantially equal to -30°C.

6. Formulation according to Claim 5, in which the said second additive is a naphthalic oil plasticizer or a C₁₈-C₃₀ tricarboxylic ester.

7. Formulation according to one of Claims 1 to 6, in which the amount of the first additive is between 3 and 5 phr (parts by hundred parts of rubber, by weight).

8. Formulation according to Claim 7, in which the said amount is 4 phr (parts by hundred parts of rubber, by weight).

9. Formulation for the preparation of a wiping blade element according to one of Claims 1 to 8, in which the ratio by weight of the first additive to the second additive is between 2 and 3.

10. Formulation according to Claim 9, in which the ratio is substantially equal to 2.5.

11. Wiping blade element for a vehicle windscreen wiper blade prepared from a formulation according to one of Claims 1 to 10.

12. Vehicle windscreen wiper blade comprising a wiping blade element according to the preceding claim.

13. Process for the manufacture of a wiping blade element for a vehicle windscreen wiper blade by vulcanization of a formulation according to one of Claims 1 to 10.

14. Process according to Claim 13, comprising a stage of moulding the wiping blade element.
